# FASCICULE DE BREVET EUROPEEN

(11) **EP 0 532 429 B1**
(45) Date de publication et mention de la délivrance du brevet: **18.10.1995**
(21) Numéro de dépôt: 92402501.8
(22) Date de dépôt: 14.09.1992
(51) Int. Cl.: F25J 3/04, F25B 27/02

(54) **Procédé de refroidissement d'un gaz dans une installation d'exploitation de gaz de l'air, et installation**
Verfahren zum Kühlen eines Gases in einer Vorrichtung zur Nutzung von Luft und eine Vorrichtung zur Durchführung des Verfahrens
Gas refrigeration process in an air gas exploitational installation and the installation itself

(30) Priorité: 13.09.1991 FR 9111305
(43) Date de publication de la demande: 17.03.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Chretien, Denis, F-94160 Saint Mande (FR); Mazieres, Philippe, F-93370 Montfermeil (FR)
(74) Mandataire: Caen, Thierry Alain

(56) Documents cités:
- EP-A- 0 367 428
- DE-A- 3 114 842
- US-A- 4 873 839

## Description

La présente invention concerne un procédé de refroidissement d'un gaz dans une installation d'exploitation de gaz de l'air comprenant au moins une unité de séparation de gaz de l'air alimentée par de l'air comprimé et au moins un groupe frigorifique à absorption produisant du fluide froid placé en échange thermique avec un gaz de l'installation pour refroidir ce dernier.

Un procédé de ce type se retrouve dans le document DE-A-31.14.842 qui décrit l'exploitation de la chaleur perdue dans un four de sidérurgie pour refroidir et comprimer un gaz de l'installation.

Les installations d'exploitation de gaz de l'air et en particulier leurs unités associées de séparation de gaz de l'air, tels que l'oxygène, l'azote et l'argon, classiquement du type à double colonne de distillation, sont très consommatrices en énergie, notamment au niveau de la fourniture de l'air d'alimentation qui est comprimé à fort débit à une pression en général comprise entre 4 et 17 x 10⁵ Pa absolus. D'autre part, ces unités produisent un mélange résiduaire riche en azote partiellement exploité dans l'installation, notamment pour refroidir partiellement l'air comprimé d'alimentation, lequel doit être nécessairement refroidi, typiquement à une température inférieure à 20°C, avant son épuration et son introduction dans l'unité de séparation.

La présente invention a pour objet de proposer un procédé, simple et fiable, permettant de réduire la consommation en énergie de telles installations, offrant une grande souplesse d'utilisation et susceptible de nombreuses applications.

Pour ce faire, selon l'invention, le procédé de la revendication 1 comprend les étapes de comprimer l'air d'alimentation à une pression supérieure à 4 x 10⁵ Pa et à une température supérieure à 100°C, et d'utiliser l'air comprimé chaud d'alimentation comme source de chaleur du groupe frigorifique à absorption.

Selon des caractéristiques plus particulières de l'invention, le gaz refroidi est l'air d'alimentation, comprimé ou à comprimer, un des constituants de l'air produits par l'unité de séparation ou un autre gaz exploité dans l'installation.

Avec un tel procédé, les calories excédentaires du flux d'air comprimé d'alimentation sont exploitées pour actionner un groupe frigorifique à absorption fournissant des frigories utilisables de diverses manières en offrant une grande souplesse opératoire et une grande fiabilité par rapport à des installations de réfrigération du type à machines tournantes.

La présente invention concerne également une installation d'exploitation de gaz de l'air, comprenant au moins une unité de séparation de gaz de l'air alimentée en air comprimé par au moins un compresseur non refroidi via une ligne d'amenée d'air comprimé d'alimentation, et au moins un groupe frigorifique à absorption et dont le circuit de fluide froid est couplé thermiquement à une ligne de gaz de l'installation dans laquelle circule un gaz à refroidir, caractérisée en ce que le compresseur fournit un air comprimé d'alimentation à une température supérieure à 100°C, et en ce que la source chaude du groupe frigorifique à absorption est couplée thermiquement à la ligne d'air comprimé d'alimentation.

L'installation peut être de tout type exploitant au moins un des gaz (typiquement l'oxygène) produit par l'unité de séparation, notamment une installation, dite "IGCC" de fourniture d'énergie électrique par combustion d'un gaz synthétisé par gazéification de charbon ou une installation de réduction directe de minerai de fer par le procédé dit "COREX" utilisant toutes deux de l'oxygène produit in situ. Dans ces deux cas, le compresseur d'air est un compresseur de turbine à gaz couplée à un générateur d'électricité, le compresseur fournissant un air comprimé à plus de 8 x 10⁵ Pa, à une température supérieure à 250°C. L'installation peut également être un haut fourneau fonctionnant avec de l'air sur-oxygéné, avec de l'oxygène produit in situ, auquel cas le compresseur d'air est une soufflante fournissant de l'air comprimé à 4 x 10⁵ Pa, à une température de l'ordre de 150 à 200°C.

D'autres avantages de la présente invention ressortiront de la description suivante de modes de réalisation, donnés à titre illustratif mais nullement limitatif, faite en relation avec les dessins annexés, sur lesquels :
- la figure 1 est une illustration schématique du procédé selon l'invention ; et
- la figure 2 est une vue schématique d'une installation selon l'invention.

Dans la description qui va suivre et sur les dessins, les éléments identiques ou analogues portent les mêmes chiffres de référence.

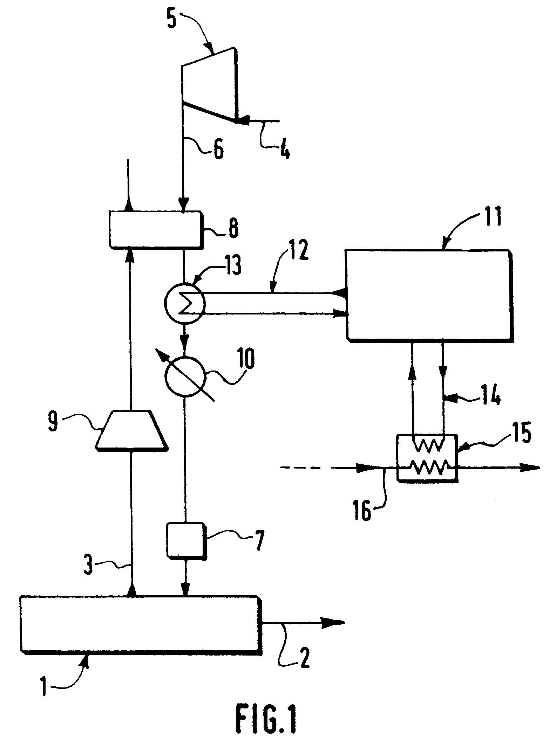

On a représenté sur la figure 1, une unité de séparation de gaz de l'air 1, typiquement une unité cryogénique de distillation d'air, fournissant au moins de l'oxygène gazeux dans une ligne de sortie 2 et de l'azote résiduaire gazeux dans une ligne de sortie 3. L'air d'alimentation de l'unité 1 est adressé, comme figuré en 4, à un groupe de compression 5 non refroidi fournissant, dans une ligne de sortie 6, de l'air comprimé à une pression supérieure à 5 x 10⁵ Pa absolus à une température supérieure à 100°C, typiquement entre 150 et 500°C. Cet air comprimé doit être refroidi avant de traverser un poste d'épuration en eau et gaz carbonique 7 et introduit dans l'unité de séparation 1. Un premier refroidissement de l'air comprimé est avantageusement effectué, en sortie du groupe de compression 5, dans un échangeur 8 traversé à contre-courant par l'azote résiduaire provenant de la ligne 3 et typiquement comprimé dans un compresseur 9. Le débit d'azote étant nécessairement inférieur à celui de l'air, ce dernier dispose d'une chaleur disponible excédentaire. Un deuxième refroidissement aval est typiquement effectué, en amont du poste d'épuration 7, dans un deuxième échangeur de chaleur 10 classiquement refroidi par une circulation d'eau.

Selon un aspect de l'invention, une portion de la ligne d'alimentation en air comprimé 6 est couplée fonctionnellement à un groupe frigorifique à absorption 11 du type à mélange binaire, par exemple eau/bromure de lithium ou ammoniac/eau. La récupération, dans le groupe frigorifique 11, de la chaleur de l'air comprimé peut se faire directement par passage de l'air chaud dans le rebouilleur du groupe à absorption (dans le cas de mélange binaire eau/ammoniac), par un circuit de vapeur d'eau, où une chaudière de récupération récupère la chaleur de l'air pour générer la vapeur utilisée dans le groupe à absorption, ou, comme représenté sur la figure 1, par un circuit d'eau chaude pressurisée 12 en relation d'échange thermique avec l'air comprimé d'alimentation dans un échangeur 13 disposé dans la ligne 6 entre les échangeurs 8 et 10, l'eau chaude cédant ses calories au groupe frigorifique à absorption 11. Ce dernier comporte un circuit 14 de circulation de fluide froid, typiquement de l'eau, que l'on fait transiter dans un échangeur de chaleur 15 pour refroidir un gaz circulant dans une ligne de gaz 16 de l'installation.

Dans un premier mode de réalisation de l'invention, où l'installation comporte en outre un liquéfacteur d'azote ou d'oxygène, le gaz à liquéfier est acheminé, par la ligne 16, pour être prérefroidi dans l'échangeur 15, jusqu'à une température d'environ -40°C, avant d'être refroidi plus profondément et liquéfié, typiquement dans des turbines de détente. Dans ce cas, le groupe frigorifique 11 est nécessairement du type ammoniac/eau.

Dans un autre mode de réalisation de l'invention, en vue de diminuer la puissance du groupe de compression 5, le gaz traversant l'échangeur 15 dans la ligne 16 est l'air d'alimentation du groupe de compression 5, l'échangeur 15 étant disposé à l'entrée d'aspiration 4 de ce dernier. De façon similaire, le gaz traversant l'échangeur 15 dans la ligne 16 peut être l'azote résiduaire de la ligne 3 provenant d'un interétage du compresseur 9 et retourné, refroidi, dans l'interétage.

Dans une autre variante, le gaz circulant dans la ligne 16 peut être de l'air ambiant servant à la climatisation de locaux ou d'unités de l'installation.

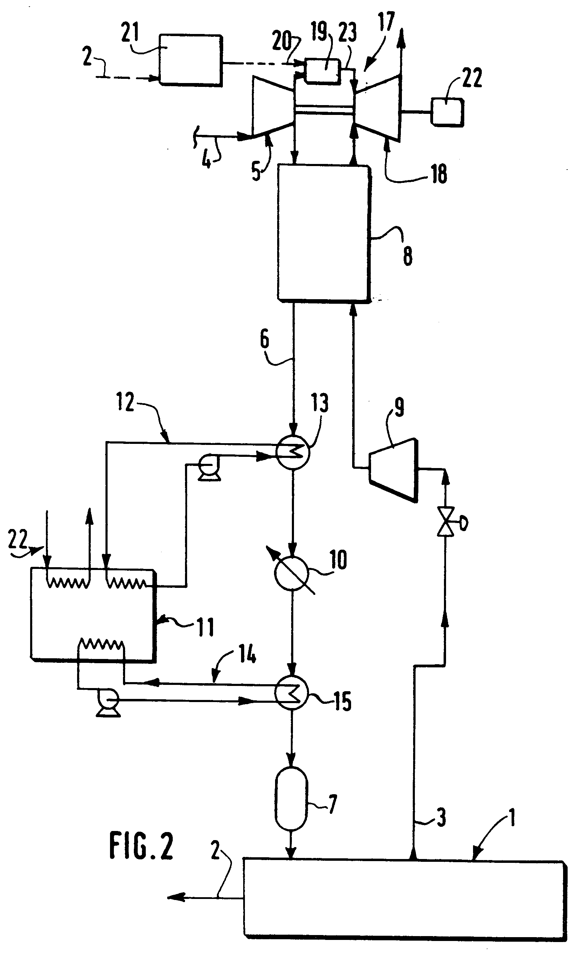

Dans un autre mode de réalisation de l'invention, représenté sur la figure 2, le gaz refroidi dans l'échangeur 15 est l'air comprimé d'alimentation lui-même. Sur la figure 2, on reconnaît les éléments déjà décrits en relation avec la figure 1. Dans ce mode de réalisation, le groupe 5 de compression de l'air d'alimentation est un élément d'un groupe moto-compresseur 17 comprenant une turbine 18 et une chambre de combustion 19 alimentée par une portion de l'air comprimé dans le groupe 5 et par un carburant 20. Le carburant 20 peut être du fioule, du gaz naturel ou un gaz de synthèse provenant d'une unité de traitement 21, par exemple une unité de gazéification de charbon ou une unité de réduction de minerai de fer, alimentée en oxygène produit en sortie 2 de l'unité de séparation 1. La turbine 18, entraînant le groupe de compression 5 et un générateur d'électricité 22, est actionnée par les gaz de combustion 23 provenant de la chambre de combustion 19 et avantageusement par l'azote résiduaire de la ligne 3 comprimé dans le compresseur 9 et refroidi dans l'échangeur 8. Dans ce mode de réalisation, la ligne d'air comprimé d'alimentation 6 comprend, entre l'échangeur de refroidissement à eau 10 et l'unité d'épuration 7, l'échangeur 15 associé au circuit de liquide froid 14 du groupe frigorifique à absorption 11, dans lequel le circuit additionnel d'eau de refroidissement est figuré en 22.

A titre indicatif, dans le mode de réalisation de la figure 2, l'air comprimé d'alimentation, en sortie du groupe de compression 5, est à une pression d'environ 16 x 10⁵ Pa absolus et une température de l'ordre de 400°C. Il est tout d'abord refroidi dans l'échangeur 8 à une température d'environ 210°C et transfert de sa chaleur, dans l'échangeur 13, à de l'eau dans le circuit 12 contenant de l'eau chaude pressurisée à une pression d'environ 15 x 10⁵ Pa absolus. L'air comprimé sort de l'échangeur 13 à une température d'environ 180°C et est refroidi à une température d'environ 30°C dans l'échangeur 10. L'air comprimé est finalement refroidi à une température d'environ 10°C dans l'échangeur 15 par de l'eau froide à une température d'environ 7°C provenant du groupe frigorifique à absorption 11, lequel a ici une puissance frigorifique supérieure à 2 Mw. L'air comprimé refroidi est épuré en gaz carbonique et en eau dans le poste d'épuration 7 pour entrer dans l'unité de séparation 1. Cette dernière fournit, dans la ligne 3, de l'azote résiduaire qui est comprimé à une pression d'environ 19 x 10⁵ Pa absolus dans le compresseur 9, réchauffé à une température d'environ 360°C dans l'échangeur 8 avant d'être introduit dans la turbine 18. L'eau chaude dans le circuit 12, pressurisée à une pression d'environ 15 x 10⁵ Pa absolus, est portée dans l'échangeur 13 à une température d'environ 145°C pour céder ses calories dans le groupe frigorifique 11 d'où elle ressort à une température d'environ 120°C. L'eau froide dans le circuit 14, sortant à une température de 7°C du groupe frigorifique 11, se réchauffe dans l'échangeur 15 jusqu'à une température d'environ 12°C. Dans cet exemple, avec un groupe frigorifique 11 du type eau/bromure de lithium, le gain énergétique global de l'installation est d'environ 800 KW électrique. Dans ce type d'installation selon l'invention, le gain énergétique global est de l'ordre de 3 à 5% selon les dimensionnements de l'installation.

## Revendications

1. Procédé de refroidissement d'un gaz dans une installation d'exploitation de gaz de l'air comprenant au moins une unité de séparation de gaz de l'air (1), alimentée (6) par de l'air comprimé, et au moins un groupe frigorifique à absorption (11) produisant du fluide froid (14) placé en échange thermique (15) avec un gaz (16 ; 6) de l'installation pour refroidir ce dernier, caractérisé en ce qu'il comprend les étapes de comprimer l'air d'alimentation à une pression supérieure à 4 x 10⁵ Pa et une température supérieure à 100°C, et d'utiliser l'air comprimé chaud d'alimentation comme source de chaleur du groupe frigorifique à absorption (11).

2. Procédé selon la revendication 1 ou 2, caractérisé en ce que l'air est comprimé a une température inférieure à 500°C.

3. Procédé selon la revendication 1 ou 2, caractérisé en ce que le gaz refroidi est l'air comprimé d'alimentation de l'unité de séparation.

4. Procédé selon la revendication 1 ou 2, caractérisé en ce que le gaz refroidi est l'air d'alimentation à comprimer.

5. Procédé selon la revendication 1 ou 2, caractérisé en ce que le gaz refroidi est un constituant de l'air produit par l'unité de séparation (1).

6. Procédé selon l'une des revendications 1 à 5, caractérisé en ce que l'air comprimé d'alimentation est préalablement refroidi (8) par échange thermique avec un mélange résiduaire riche en azote (3) produit par l'unité de séparation.

7. Installation d'exploitation de gaz de l'air pour la mise en oeuvre du procédé selon l'une des revendications précédentes, comprenant au moins une unité de séparation de gaz de l'air (1) alimentée (6) en air comprimé par au moins un compresseur non refroidi (5) via une ligne (6) d'amenée d'air comprimé d'alimentation, et au moins un groupe frigorifique à absorption (11) dont le circuit de fluide froid (14) est couplé thermiquement à une ligne de gaz (16 ; 6) de l'installation dans laquelle circule un gaz à refroidir, caractérisée en ce que le compresseur (5) fournit un air comprimé d'alimentation à une température supérieure à 100°C, et en ce que la source chaude du groupe frigorifique à absorption (11) est couplée thermiquement à la ligne d'air comprimé d'alimentation (6).

8. Installation selon la revendication 7, caractérisée en ce que la ligne de gaz à refroidir est la ligne d'air comprimé d'alimentation (6).

9. Installation selon la revendication 7, caractérisée en ce que la ligne de gaz à refroidir est la ligne d'alimentation en air (4) du compresseur (5).

10. Installation selon la revendication 7, caractérisée en ce que la ligne de gaz à refroidir est une ligne (16) de production de gaz de l'air sortant de l'unité de séparation (1).

11. Installation selon l'une des revendications 7 à 10, caractérisée en ce que le compresseur (5) est le compresseur d'un groupe turbine à gaz (17).

12. Installation selon la revendication 11, caractérisée en ce qu'elle comprend une ligne de mélange résiduaire riche en azote (3) provenant de l'unité de séparation (1) et reliée à l'entrée de la turbine (18) du groupe turbine à gaz (17).

13. Installation selon la revendication 11 ou 12, caractérisée en ce qu'elle comprend une unité de traitement (21) alimentée en oxygène (2) à partir de l'unité de séparation (1).

14. Installation selon la revendication 13, caractérisée en ce que l'unité de traitement produit un gaz combustible (20) alimentant la chambre de combustion (19) du groupe turbine à gaz (17).

## Patentansprüche

1. Verfahren zum Kühlen eines Gases in einer Vorrichtung zur Nutzung von Gasen der Luft mit zumindest einer Luftgas-Trenneinheit (1), die mit verdichteter Luft gespeist wird (6), sowie zumindest einer Absorber-Kühlgruppe (11), die ein kaltes Fluid (14) erzeugt, das Wärme mit einem Gas (16; 6) der Vorrichtung austauscht (15), um dieses letztere zu Kühlen, gekennzeichnet durch die Schritte des Verdichtens der Speiseluft auf einen Druck von mehr als 4 x 10⁵ Pa und eine Temperatur von mehr als 100° C, und des Verwendens der verdichteten, warmen Speiseluft als Wärmequelle der Absorber-Kühlgruppe (11).

2. Verfahren nach Anspruch 1 oder 2, dadurch gekennzeichnet, daß die verdichtete Luft eine Temperatur von weniger als 500° C besitzt.

3. Verfahren nach Anspruch 1 oder 2, dadurch gekennzeichnet, daß das gekühlte Gas die verdichtete Speiseluft der Trenneinheit (1) ist.

4. Verfahren nach Anspruch 1 oder 2, dadurch gekennzeichnet, daß das gekühlte Gas die zu verdichtende Speiseluft ist.

5. Verfahren nach Anspruch 1 oder 2, dadurch gekennzeichnet, daß das gekühlte Gas ein durch die Trenneinheit (1) erzeugter Bestandteil der Luft ist.

6. Verfahren nach einem der Ansprüche 1 bis 5, dadurch gekennzeichnet, daß die verdichtete Speiseluft zuvor durch Wärmeaustausch mit einem durch die Trenneinheit (1) erzeugten stickstoffreichen Restgemisch (3) gekühlt wird (8).

7. Vorrichtung zur Nutzung von Gasen der Luft zur Anwendung des Verfahrens nach einem der vorangehenden Ansprüche, umfassend zumindest eine Luftgas-Trenneinheit (1), die über eine Leitung (6) zur Zufuhr verdichteter Speiseluft mit durch zumindest einen nicht gekühlten Verdichter (5) verdichteter Luft gespeist wird, sowie zumindest eine Absorber-Kühlgruppe (11), deren Kreislauf kalten Fluids (14) thermisch an eine Gasleitung (16; 6) der Vorrichtung gekoppelt ist, in welcher ein zu kühlendes Gas zirkuliert, dadurch gekennzeichnet, daß der Verdichter (5) eine verdichtete Speiseluft mit einer Temperatur von mehr als 100 C abgibt, und dadurch, daß die Wärmequelle der Absorber-Kühlgruppe (11) thermisch an die Leitung (6) mit der verdichteten Speiseluft gekoppelt ist.

8. Vorrichtung nach Anspruch 7, dadurch gekennzeichnet, daß die Leitung mit dem zu kühlenden Gas die Leitung (6) mit der verdichteten Speiseluft ist.

9. Vorrichtung nach Anspruch 7, dadurch gekennzeichnet, daß die Leitung mit dem zu kühlenden Gas die Speiseluftleitung (4) Verdichters (5) ist.

10. Vorrichtung nach Anspruch 7, dadurch gekennzeichnet, daß die Leitung mit dem zu kühlenden Gas eine von der Trenneinheit (1) abgehende Luftgas-Produktionsleitung (16) ist.

11. Vorrichtung nach einem der Ansprüche 7 bis 10, dadurch gekennzeichnet, daß der Verdichter (5) der Verdichter einer Gasturbinengruppe (17) ist.

12. Vorrichtung nach Anspruch 11, gekennzeichnet durch eine von der Trenneinheit (1) kommende und mit dem Eingang der Turbine (18) der Gasturbinengruppe (17) verbundene Leitung mit stickstoffreichem Restgemisch (3).

13. Vorrichtung nach Anspruch 11 oder 12, gekennzeichnet durch eine von der Trenneinheit (1) aus mit Sauerstoff (2) gespeiste Verarbeitungseinheit (21).

14. Vorrichtung nach Anspruch 13, dadurch gekennzeichnet, daß die Verarbeitungseinheit (21) ein brennbares, die Verbrennungskammer (19) der Gasturbinengruppe (17) speisendes Gas (20) erzeugt.

## Claims

1. Method for cooling gas in an installation for using gas from air comprising at least one unit for separating gas from air (1), supplied (6) with compressed air, and at least one absorption refrigerating unit (11) producing cold fluid (14) placed in heat exchange (15) with a gas (16; 6) from the installation in order to cool the latter gas, characterised in that it comprises the steps of compressing the supply air to a pressure greater than 4 x 10⁵ Pa and a temperature above 100°C, and using the hot compressed supply air as a heat source for the absorption refrigerating unit (11).

2. Method according to Claim 1 or 2, characterised in that the air is compressed at a temperature below 500°C.

3. Method according to Claim 1 or 2, characterised in that the cooled gas is the compressed air supplying the separation unit.

4. Method according to Claim 1 or 2, characterised in that the cooled gas is the supply air to be compressed.

5. Method according to Claim 1 or 2, characterised in that the cooled gas is a constituent of the air produced by the separation unit (1).

6. Method according to one of Claims 1 to 5, characterised in that the compressed supply air is previously cooled (8) by heat exchange with a residual nitrogen-rich mixture (3) produced by the separation unit.

7. Installation for using gas from air for implementing the method according to one of the preceding claims, comprising at least one unit for separating gas from air (1), supplied (6) with compressed air by at least one uncooled compressor (5) via a feed line (6) for compressed supply air, and at least one absorption refrigerating unit (11) whose cold fluid circuit (14) is thermally coupled to a gas line (16; 6) of the installation in which a gas to be cooled circulates, characterised in that the compressor (5) supplies compressed supply air at a temperature above 100°C, and in that the hot source of the absorption refrigerating unit (11) is thermally coupled to the compressed supply air line (6).

8. Installation according to Claim 7, characterised in that the gas line to be cooled is the compressed supply air line (6).

9. Installation according to Claim 7, characterised in that the gas line to be cooled is the air supply line (4) to the compressor (5).

10. Installation according to Claim 7, characterised in that the gas line to be cooled is a line (16) producing gas from the air leaving the separation unit (1).

11. Installation according to one of Claims 7 to 10, characterised in that the compressor (5) is the compressor of a gas turbine set (17).

12. Installation according to Claim 11, characterised in that it comprises a nitrogen-rich residual mixture line (3) coming from the separation unit (1) and connected to the input to the turbine (18) of the gas turbine set (17).

13. Installation according to Claim 11 or 12, characterised in that it comprises a treatment unit (21) supplied with oxygen (2) from the separation unit (1).

14. Installation according to Claim 13, characterised in that the treatment unit produces a fuel gas (20) supplying the combustion chamber (19) of the gas turbine set (17).
